## Europäisches Patentamt
## European Patent Office
## Office européen des brevets

(19)

(11) Veröffentlichungsnummer: **0 283 430**
**A2**

(12) **EUROPÄISCHE PATENTANMELDUNG**

(21) Anmeldenummer: **88810057.5**

(22) Anmeldetag: **01.02.88**

(51) Int. Cl.4: **B 23 Q 3/157**
**B 23 H 1/00**

(30) Priorität: **01.02.87 CH 335/87**

(43) Veröffentlichungstag der Anmeldung:
**21.09.88 Patentblatt 88/38**

(84) Benannte Vertragsstaaten: **ES**

(71) Anmelder: **REISHAUER AG.**
**Industriestrasse 36**
**CH-8304 Wallisellen (CH)**

(72) Erfinder: **Feisel, Armin**
**Fischerhäuserstrasse 29**
**CH-8200 Schaffhausen (CH)**

**Fenner, Hans-Ulrich**
**Unterwegli 9**
**CH-8404 Winterthur (CH)**

(74) Vertreter: **Punschke, Edgar Patentanwalt**
**Löwenstrasse 1**
**CH-8001 Zürich (CH)**

(54) Funkenerosionsmaschine mit Elektrodenwechsler.

(57)  Eine Funkenerosionsmaschine ist mit einem Elektrodenmagazin (11) ausgestattet, welches vollständig auf der Rückseite der Maschine, hinter dem Bereich der Koordinatenführungen
(X), angeordnet ist. Zwischen den Arbeitsbereich für die
Werkzeugelektrode (1) und dem auf der Rückseite der
Maschine angeordneten Elektrodenmagazin (11) ist mindestens eine Oeffnung (25, 26) zum Durchführen von Elektroden
(1) während des Wechselvorganges vorgesehen. Im Bereich
des Maschinentisches (3) ist mindestens eine Uebergabestation (C, E) für den Elektrodenwechsel vorgesehen. Durch
geeignete Steuerung des Elektrodenwechslers (10) lässt sich
ein gestaffelter Zugriff zu ein und derselben Elektrode von
verschiedenen Plätzen auf dem Maschinentisch aus erreichen.
Besonders vorteilhaft ist eine Bedienungsstation (30), welche
auf einer Schienenführung (31) über die gesamte Maschinenbreite verfahrbar ist.

Fig. 2

**Beschreibung**

## FUNKENEROSIONSMASCHINE MIT ELEKTRODENWECHSLER

Die Erfindung betrifft eine Funkenerosionsmaschine mit einem Elektrodenwechsler gemäss dem Oberbegriff des Patentanspruchs 1.

Funkenerosionsmaschinen werden zunehmend in automatischen Produktionsanlagen "rund um die Uhr" genutzt. Geführt von einer NC-Steuerung führt die Maschine zuvor programmierte Arbeitsschritte aus, wobei die Erosionswerkzeuge zwischen einzelnen Bearbeitungsschritten gewechselt werden. Sie sind in einem Elektrodenwechsler gespeichert, der mit der Maschine in Verbindung steht. Da die Herstellung der Elektroden sehr aufwendig ist, besteht grosses Interesse, insbesondere an Produktionsanlagen, die teuren Elektroden optimal zu nutzen. Insbesondere für Maschinen zur Bearbeitung grosser Werkstücke besteht in der Praxis keine befriedigende Lösung zur Integration eines Elektrodenwechslers in die Maschine und in den vorwiegend automatisch gesteuerten Prozessablauf.

Die bisherige Technik sieht vor, dass an der Maschine ein Elektrodenmagazin vorgesehen ist, in welchem diejenigen Elektroden enthalten sind, welche zur Bearbeitung eines sich gerade auf dem Maschinentisch befindlichen Werkstücks erforderlich sind. Während der Benutzung eines der Werkzeuge aus dem Magazin bleiben alle anderen ungenutzt. Sind mehrere Maschinen zur parallelen Bearbeitung gleicher Werkstücke vorhanden, muss auf jeder Maschine ein vollständiger Werkzeugsatz vorhanden sein. Bei komplizierten Werkstücken kann dies mit erheblichen Aufwendungen verbunden sein, so dass gelegentlich auf die parallele und damit effektive Bearbeitung dieser Art aus Kostengründen verzichtet wird. Bei Serienfabrikation besteht die Gefahr, dass sich gleichartige Werkzeugelektroden auf verschiedenen Maschinen unterschiedlich stark abnutzen, so dass die Masstoleranzen der Werkstücke innerhalb der Serie stärker als erwünscht schwanken.

Bei grossen Maschinen treten mit der notwendigen Verbreiterung des Arbeitstisches zusätzliche Schwierigkeiten für die Integration eines automatischen Elektrodenwechslers auf. Wegen des langen Weges und damit des Zeitaufwandes bei der Uebergabe der Elektroden nimmt die Gesamtbelegung der Maschine zur Bearbeitung eines Werkstücks mit häufigem Elektrodenwechsel merklich zu.

Aus EP-0 111 633 ist eine automatische Werkzeug-Wechselvorrichtung bekannt, bei der das Werkzeugmagazin mit der verfahrbaren Werkzeughalterung an der Maschine verbunden ist und vorzugsweise über der projizierten Grundfläche des Maschinenarbeitstisches angeordnet ist. Diese Anordnung wird zwar für bestimmte Anwendungen als platzsparend angesehen. Bei grösseren Elektroden wird jedoch die gesamte Elektrodenhalterung und deren Führung, auch Pinole genannt, mit einem erheblichen zusätzlichen Gewicht belastet, welche die Beweglichkeit dieser koordinatengesteuert verfahrbaren Baugruppe stört. Ausserdem würde der Magazinanbau bei grösseren Elektroden die Zugänglichkeit zum Maschinentisch bzw. zum Werkstück unerwünscht einschränken.

Es ist Aufgabe der vorliegenden Erfindung, eine Funkenerosionsmaschine mit Elektrodenmagazin zu schaffen, welche eine bessere Ausnutzung wertvoller Werkzeuge gewährleistet und gleichzeitig die Ausnutzungsmöglichkeit der Anlage zur Erzielung einer optimalen Produktivität verbessert. Ausserdem soll die gleichmässige Produktqualität bei Serienfertigungen innerhalb enger Toleranzgrenzen gewährleistet sein. Dabei soll die freie Zugänglichkeit zum Arbeitsbereich der Maschine sichergestellt sein.

Diese Aufgabe wird erfindungsgemäss durch die in den Patentansprüchen definierten Merkmale gelöst.

Der entscheidende Vorteil dieser Massnahme liegt im wesentlichen darin, dass die Elektroden auch bei breiten Maschinen rotierend an mehreren Uebergatestationen zugänglich sind, so dass sich die Belegungszeiten der Maschinen auch bei der Bearbeitung grosser Werkstück mit häufigen Elektrodenwechseln optimieren lassen. Ausserdem lässt sich durch den Mehrfachzugriff auf das Elektrodenmagazin die Ausnutzung einzelner Elektroden innerhalb eines Magazins verbessern. Die Pinole ist nicht durch zusätzliches Gewicht des Elektrodenmagazins belastet.

Sind auf der Maschine mehrere Bearbeitungsstationen oder mehrere autonome Tische vorgesehen, erfolgt auch in diesem Fall der Zugriff auf ein gemeinsames Elektrodenmagazin. Damit ist die Ausnutzung der Elektroden innerhalb des Magazins nochmals verbessert, da die Ruhezeiten der Elektroden geringer werden. Die Bearbeitung von Massenprodukten lässt sich damit rationeller durchführen als mit konventionellen Maschinen.

Die in einem Magazin vorzugsweise hängenden Elektroden weisen eine einfache Spannvorrichtung auf, welche mit einer zweckmässigen Uebergabevorrichtung zwischen der Elektrodenhalterung an der Maschine und dem Elektrodenmagazin zusammenwirkt. Unmittelbar nach der Bearbeitung hängen die Elektroden über dem Schmutztank des Dielektrikum-Aggregats, wodurch das in der Regel kritische Reinigungproblem besonders zweckmässig gelöst ist.

Durch die Verlegung des Elektrodenmagazins an den hinteren Teil der Maschine sind beide Seiten neben dem Maschinenbett frei. Dieser Raum lässt sich auf besonders vorteilhafte Weise für eine längs der Vorderkante des Maschinenbetts und auf beide Seiten der Maschine verfahrbare Bedienungs-Konsole nutzen, wodurch sich eine wesentliche Verbesserung der Bedienbarkeit der Maschine insbesondere beim Rüsten ergibt.

Im folgenden wird die Erfindung anhand bevorzugter Ausführungsbeispiele mit Hilfe der Zeichnungen näher erläutert. Es zeigen:

    Fig. 1 die Aufsicht auf eine Senk-Erosionsmaschine mit den Hilfsaggregaten,

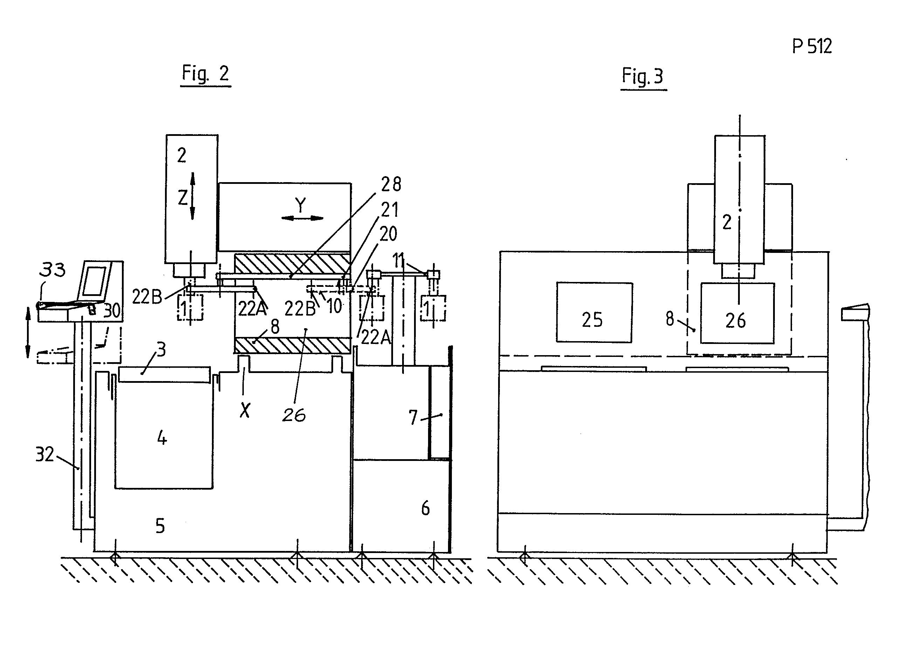

Fig. 2 die teilweise geschnittene Seitenansicht der Maschine nach Fig. 1, und

Fig. 3 die Vorderansicht der Maschine gemäss Fig. 1.

Die in den Figuren gezeigte Funkenerosionsmaschine, die als Senk-Erosionsmaschine ausgebildet ist, weist als wesentliches Bestandteil eine Pinole 2 zur Aufnahme einer Werkzeugelektrode 1, und einen darunter angeordneten Maschinentisch 3 auf, unter dem sich wiederum ein Dielektrikum-Behälter 4 befindet. Zur kompletten Maschine gehören ferner ein tragendes Maschinenbett 5 sowie Hilfsaggregate, nämlich ein Dielektrikum-Aggregat zur Aufbereitung des verwendeten Dielektrikums mit einem Schmutztank 6 zur Aufnahme des von der Maschine kommenden Dielektrikums und einem Saubertank 7, in dem das aufbereitete Dielektrikum gespeichert wird.

Als weitere, in den Figuren nicht dargestellte Komponenten der Maschine sind ein Generator zur Erzeugung der gewünschten Entladungsimpulse und eine Maschinensteuerung vorgesehen.

Diese Hilfsaggregate sind so um die eigentliche Maschine angeordnet, dass ein Bedienungsbereich A frei bleibt und die ungehinderte Zugänglichkeit zum Bearbeitungsteil der Maschine gewährleistet ist. Durch geeignete Maschinensteuerungen in X-, Y- und Z-Richtung lässt sich die Elektrode 1 relativ zum Werkstück beliebig positionieren. Im Beispiel sind dazu X-, Y- und Z-Koordinatenschlitten vorgesehen, mit denen die Pinole 2 und damit die Werkzeugelektrode 1 geführt wird. Es sind auch andere Führungen, z.B. auch die Führung des Maschinentisches und damit der Werkstückelektrode möglich.

In der Maschine ist ferner ein Elektrodenwechsler 10 vorgesehen, der mit einem Elektrodenmagazin 11 und der Pinole 2 zusammenwirkt. Das Magazin 11 ist im hinteren Bereich der Maschine, insbesondere hinter dem X-Koordinatenschlitten, angeordnet. Es befindet sich im Beispiel direkt über dem Schmutztank 6 und ist in der horizontale Ebene drehbar. Das Magazin besteht aus einem kettenartigen Antriebs- und Halterungsteil für die Bearbeitungselektroden, welche im Magazin hängend angeordnet sind. Die Hängeanordnung hat den Vorteil, dass die Elektroden bei der Uebergabe an die Pinole 2 zum Zwecke der Werkstückbearbeitung nicht gedreht oder gewendet werden müssen, sondern in der gleichen Position aus dem Magazin heraus an die Pinole gebracht und dort in der gleichen Position angesetzt werden können. Sowohl die Elektrode 1 als auch die Pinole 2 sind mit einer korrespondierenden Schnellspannvorrichtung ausgestattet, welche eine besonders schnelle und zweckmässige Uebernahme und Halterung der Elektroden gewährleistet.

Die Uebergabe der Elektroden zwischen dem Magazin 11 hinter dem Maschinenständer und der Pinole 2 erfolgt durch mindestens eine Oeffnung 25, 26, die im Maschinenständer 8 vorgesehen ist, mit Hilfe des erwähnten Elektrodenwechslers 10. Die Oeffnungen 25, 26 sind vorzugsweise verschliessbar, z.B. durch eine Klappe, um das Innere der Maschine vor Verschmutzung zu schützen.

Der Elektrodenwechsler 10 besteht aus einem Schwenkarm 20, der auf einer vertikalen Drehachse 21 gelagert ist und an seinen beiden Enden Aufnahmepositionen 22A und 22B für die Elektroden aufweist. Der Wechsler 10 ist innerhalb der Oeffnung 25 bzw. 26 parallel zur Y-Richtung der Maschinensteuerung z.B. auf Schienen 28 verfahrbar.

Zum Wechsel einer in der Pinole 2 befindlichen ersten Elektrode durch eine vom Magazin 11 herangeführte zweite Elektrode wird die Pinole programmgesteuert in eine der vorprogrammierten Uebergabestationen, z.B. in die Uebergabestation C, verfahren. Der Wechsler 10 hat inzwischen in einer Magazin-Uebernahmestation D die neue zweite Elektrode aus dem Magazin 11 in seine Aufnahmeposition 22A übernommen. In den Schienen 28 fährt der Wechsler 10 nach vorn bis in die Uebergabestation C an die Pinole 2 heran, übernimmt mit der zweiten, leeren Aufnahmeposition 22B die gebrauchte erste Elektrode aus der Pinole 2, schwenkt um seine Drehachse 21 und übergibt die neue, zweite Elektrode aus der Aufnahmeposition 22A an die Pinole 2. Anschliessend fährt der Wechsler 10 ohne zu schwenken wieder nach hinten in die Magazin-Uebernahmestation D, um die gebrauchte, zweite Elektrode aus seiner Aufnahmeposition 22B dem Magazin 11 zu übergeben.

Der geschilderte Ablauf erlaubt einen sehr schnellen und - wie im folgenden beschrieben - mehrfachen Zugriff auf das Elektrodenmagazin 11, wobei der Schwenkarm 20 nur wenige Schwenkbewegungen durchführen muss. Insgesamt führt der Wechsler 10 beim Elektrodenwechsel nur wenige unkomplizierte und einfach zu steuernde Bewegungen aus.

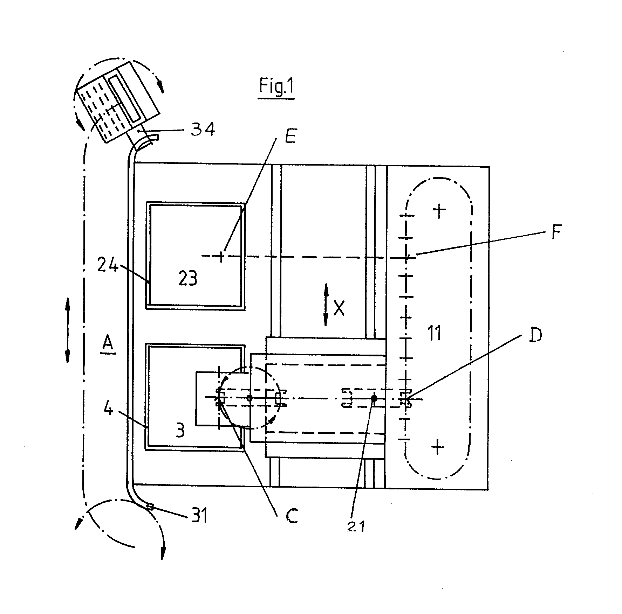

Die Anordnung des umlaufenden Magazins 11 hinter dem X - Schlitten weist den entscheidenden Vorteil auf, dass mehrere nebeneinander angeordnete Bearbeitungsstationen auf dem gleichen oder auf benachbarten Bearbeitungstischen vom gleichen Elektrodenmagazin 11 bedient werden können. Im Ausführungsbeispiel nach Fig. 1 ist denn auch als Beispiel ein zweiter Maschinentisch 23 vorgesehen, der sogar einen eigenen Dielektrikumsbehälter 24 aufweisen kann. Auf diesem Tisch kann ein zweites identisches Werkstück bearbeitet wer den, wobei der Elektrodenwechsler 10 an einer zweiten Uebergabestation E durch die zweite Gehäuseöffnung 26 in einer zweiten Magazin-Uebernahmestation F Zugriff zu dem gemeinsamen Elektrodenmagazin 11 hat. Vorteilhaft ist in diesem Fall eine bestimmte Phasenverschiebung in der Bearbeitung, so dass der Zugriff zu den einzelnen Elektroden programmgesteuert gestaffelt erfolgen kann und es nicht zu Ueberschneidungen kommt. Dies lässt sich durch einfache Massnahmen im Programm der Maschinensteuerung sicherstellen.

Der im Beispiel von den Oeffnungen 25, 26 durchbrochene X-Koordinatenschlitten lässt sich als stabile Kastenkonstruktion ausführen, so dass der Einbezug der Oeffnungen in dieses Bauteil dessen Stabilität zusätzlich wesentlich erhöht.

Auch auf einem einzigen sehr breiten Maschinen-Tisch können mehrere Uebergabestationen C, E für den Elektrodenwechsler 10 zu einem vereinfachten und zweckmässigen Bewegungsablauf führen.

Die Bedienung der beschriebenen Maschine lässt sich durch eine im folgenden als Beispiel gezeigte Zusatzeinrichtung besonders vorteilhaft und zweckmässig vereinfachen. Damit das Einrichten der Maschine auch bei breiten Tischen von z.B. 2,5 m Breite, eventuell mit mehreren Bearbeitungsplätzen, mit grösster Präzision und mit der gewünschten Zuverlässigkeit vorgenommen werden kann, ist eine längs des Maschinentisches 3 bzw. der Maschinentische 3, 23 verschiebbare einzige Bedienungskonsole 30 vorgesehen. Die Konsole 30 ist schwenkbar auf einem Arm 32 montiert und von einer Lauf-und Führungsschiene 31 geführt, welche im bevorzugten Beispiel an der vorderen unteren Kante des Maschinengehäuses unter dem Maschinentisch entlang verläuft und seitlich in einem leichten Bogen um den Maschinentischbereich herum geführt ist.

Direkt am Gehäuse der Konsole 30 ist eine bei Berührung reagierende Kontaktleiste 33 angeordnet, welche auf eine Bremsvorrichtung zwischen dem Konsolenarm und der Führungsschiene 31 wirkt. Die Kontaktleiste kann als elektrischer oder druckelektrischer Sensor ausgebildet sein. Bei Berührung wird eine sonst arretierte Bremse 34 gegenüber der Schiene 31 gelöst, so dass die Konsole längs der Schiene frei verfahrbar ist. Sobald die Kontaktleiste losgelassen wird, tritt die Bremse 34 wieder in Funktion. Diese Art der Bremsbetätigung lässt sich mit Vorteil auch auf Dreh- und/oder Schwenkgelenke des Konsolenarmes 32 erweitern. Zusätzlich kann die Konsole 30 höhenverstellbar sein.

Die über den schwenkbaren Arm 32 mit der Führungsschiene 31 in Verbindung stehende Konsole 30 trägt wesentlich zur praktischen Realisierung des Konzeptes der zuvor beschriebenen unkonventionell breiten Maschine bei. Die Maschine kann von jeder Stelle über die einzige Konsole individuell bedient werden. Es ist nicht mehr erforderlich, zwischen mehreren Konsolen umzuschalten, wenn während des Einrichtens von einer Seite des Maschinentisches auf die andere gewechselt werden muss. In Kombination mit dem auch für mehrere Bearbeitungsstationen gemeinsamen Elektrodenmagazin ist damit das Konzept einer kombinierten Erosions-Bearbeitungsstation realisiert, welche sich für den universellen und automatisierten Betrieb eignet, mit den eingangs aufgezählten weiteren Vorteilen.

## Patentansprüche

1. Funkenerosionsmaschine mit Werkzeugelektroden-Pinole (2), mit Werkstückelektroden-Tisch (3), mit Koordinatenführungen (X, Y, Z) für mindestens eine der Elektroden, mit Elektrodenmagazin (11) und Elektrodenwechsler (10) sowie mit einer Maschinensteuerung und damit verbundener Bedienungsstation (30), dadurch gekennzeichnet, dass das Elektrodenmagazin (11) vollständig auf der Rückseite der Maschine, hinter dem Bereich der Koordinatenführungen (X), angeordnet ist, dass zwischen den Arbeitsbereich für die Werkzeugelektrode (1) und dem auf der Rückseite der Maschine angeordneten Elektrodenmagazin (11) mindestens eine Oeffnung (25, 26) zum Durchführen von Elektroden (1) während des Wechselvorganges vorgesehen ist und dass im Bereich des Maschinentisches (3) mindestens eine Uebergabestation (C, E) für den Elektrodenwechsel vorgesehen ist.

2. Funkenerosionsmaschine nach Anspruch 1, dadurch gekennzeichnet, dass der Elektrodenwechsler (10) mit Mitteln zur Aufnahme der Elektroden (1) in der gleichen Lage versehen ist, in welcher die Elektroden an der Pinole (2) eingespannt sind, und dass der Elektrodenwechsler als doppelarmiger Schwenkarm (20) ausgebildet ist, welcher um eine vertikale Schwenkachse (21) drehbar ist und durch die Oeffnungen (25, 26) zwischen den Uebergabestationen (C, E) und Uebernahmestationen (D, F) im Bereich des Elektrodenmagazins (11) verfahrbar ist.

3. Funkenerosionsmaschine nach Anspruch 1, dadurch gekennzeichnet, dass mindestens eine Oeffnung (25, 26) zum Durchführen der Elektroden im X-Koordinatenschlitten der Elektrodenführung vorgesehen ist.

4. Funkenerosionsmaschine nach Anspruch 1, dadurch gekennzeichnet, dass im mindestens zwei Maschinentische (3, 23) mit je einer Elektroden-Uebergabestation (C, E) mit Zugang zum gemeinsamen Elektrodenmagazin vorgesehen sind.

5. Funkenerosionsmaschine nach Anspruch 1, dadurch gekennzeichnet, dass im Schnittbereich jeder Oeffnung (25, 26) mit dem Maschinentisch (3) je eine Uebergabestation (C, E) für den Elektrodenwechsel vorgesehen ist und dass im rückwärtigen Schnittbereich jeder Oeffnung (25, 26) mit dem Elektrodenmagazin (11) je eine Uebernahmestation (D, F), zwischen dem Elektrodenwechsler (10) und dem Magazin (11) vorgesehen ist.

6. Funkenerosionsmaschine nach Anspruch 5, dadurch gekennzeichnet, dass der Elektrodenwechsler (10) mit der Maschinensteuerung in Verbindung steht, in welcher Mittel zum gestaffelten Zugriff der ersten Uebergabestation (C) bzw. der zweiten Uebergabestation (E) auf den gemeinsamen Elektrodenspeicher (11) vorgesehen sind, so dass sich ein phasenverschobener Zugriff der verschiedenen Uebergabestationen (C, E) auf ein und dieselbe Elektrode innerhalb des Elektrodenmagazins (11) ergibt.

7. Funkenerosionsmaschine nach Anspruch 1, dadurch gekennzeichnet, dass unterhalb des Elektrodenmagazins (11) ein zum Dielektrikum-Aggregat gehörende Schmutztank (6) angeordnet ist.

8. Funkenerosionsmaschine nach Anspruch 1, dadurch gekennzeichnet, dass die Bedienungsstation (30) als Bedienungskonsole ausgebildet ist, welche auf einer Schienenführung (31) über die gesamte Maschinenbreite verfahrbar ist.

9. Funkenerosionsmaschine nach Anspruch 8, dadurch gekennzeichnet, dass die Schiene (31) parallel zur Vorderkante des Maschinentisches (3, 23) und um die Vorderkanten der Maschine herum bis in den Bereich der Seitenwände der Maschine geführt ist.

10. Funkenerosionsmaschine nach Anspruch 9, dadurch gekennzeichnet, dass an der Bedienungskonsole (30) ein manuell auslösbarer Kontaktgeber (32) angeordnet ist, dass die Konsolenführung mit Bremsvorrichtungen versehen ist und dass der Kontaktgeber (32) mit den Bremsvorrichtungen in Funktionsverbindung steht.

0283430

Fig.1

P 512

Fig. 2

Fig. 3

2

Z

Y

28
21
20
11

22B
30
22A    22B    10
1
1

33

3
8
22A

32
X    26

4
7

5
6

25    8    26

2

0283430